# FASCICULE DE BREVET EUROPEEN

(11) **EP 3 888 993 B1**
(45) Date de publication et mention de la délivrance du brevet: **16.11.2022**
(21) Numéro de dépôt: 21166359.6
(22) Date de dépôt: 31.03.2021
(51) Int. Cl.: B61B 12/06

(54) **INSTALLATION D'EMBARQUEMENT D'UN TÉLÉSIÈGE POUR L'EMBARQUEMENT DE PERSONNES ET PROCÉDÉ DE DÉTECTION ASSOCIÉ**
EINSTIEGSANLAGE FÜR EINEN SESSELLIFT ZUM EINSTEIGEN VON PERSONEN UND ENTSPRECHENDES ERFASSUNGSVERFAHREN
INSTALLATION FOR BOARDING A CHAIR-LIFT FOR BOARDING OF PEOPLE AND ASSOCIATED DETECTION METHOD

(30) Priorité: 02.04.2020 FR 2003319
(43) Date de publication de la demande: 06.10.2021
(73) Titulaire: POMA, 38340 Voreppe (FR)
(72) Inventeur: MATHIEU, Christian, 38180 Seyssins (FR)
(74) Mandataire: Alatis

(56) Documents cités:
- EP-A1- 2 221 227
- EP-A2- 0 990 571
- DE-A1- 10 134 180
- JP-B2- 6 392 033

## Description

### DOMAINE TECHNIQUE DE L'INVENTION

L'invention concerne, de façon générale, le domaine technique des installations d'embarquement des télésièges.

L'invention se rapporte plus spécifiquement à une installation d'embarquement d'un télésiège pour l'embarquement de personnes sur une structure porteuse formant un véhicule et à un procédé de détection d'une situation à risque dans une telle installation d'embarquement.

### ÉTAT DE LA TECHNIQUE ANTÉRIEURE

On connaît aujourd'hui des télésièges formant des dispositifs de transport de personnes comprenant un câble tracteur, et au moins un câble porteur sur lequel se déplace un chariot supportant des sièges à une ou plusieurs places, suspendus à intervalles réguliers sur ledit câble porteur. Dans certaines configurations, un même câble peut être tracteur et porteur. Quelle que soit la structure, chaque véhicule comprend généralement une passerelle solidaire du câble tracteur par l'intermédiaire d'une pince, fixe ou débrayable, les passerelles étant véhiculées par le câble tracteur se mouvant continûment entre une gare d'embarquement et une gare de débarquement.

L'un des soucis principaux des fabricants de télésièges ainsi que les acheteurs de ces télésièges est de garantir une sécurité optimale pour les usagers. En particulier, la sécurité des usagers sur les passerelles ou au voisinage de ces passerelles doit être garantie qu'il s'agisse d'adultes ou d'enfants.

Pour assurer la sécurité des usagers sur le télésiège, il est connu d'équiper ces passerelles d'un garde-corps. Un tel garde-corps est mobile entre une position ouverte ou levée permettant l'accès des usagers aux sièges de la passerelle, et une position fermée ou abaissée, fermant cet accès et garantissant la sécurité des personnes assises sur la passerelle durant le transport.

Les fabricants de télésièges ainsi que les acheteurs de ces télésièges sont également contraints de respecter des réglementations en vigueur très précises concernant notamment le transport des enfants. En particulier, les enfants dont la taille ne dépasse pas 1,25m ne peuvent être transportés sur un siège que s'ils sont accompagnés au moins par une personne en mesure d'apporter une aide nécessaire à ces enfants, notamment pour la manoeuvre du garde de corps et le respect des consignes de sécurité. Dans le cas d'un groupe encadré, il appartient aux responsables de ce groupe d'organiser l'affectation des enfants par siège dans le respect des aménagements prévus par l'exploitant et de s'assurer, préalablement à l'embarquement, que les personnes concernées par l'accompagnement des enfants ne s'y opposent pas.

Un autre souci des fabricants de télésièges ainsi que les acheteurs de ces télésièges est de concevoir une installation offrant le meilleur rapport coût/débit horaire en permettant d'assurer un flux de transport d'usagers suffisant. Les documents EP 0990571 A2 et EP 2221227 Al décrivent des installations d'embarquement d'un télésiège comprenant au moins deux portillons de cadencement adjacents pour réguler un flux de personnes à embarquer.

### EXPOSE DE L'INVENTION

L'invention vise à remédier à tout ou partie des inconvénients de l'état de la technique en proposant notamment une solution permettant d'améliorer le débit horaire du nombre d'usagers transportés tout en garantissant encore la sécurité des usagers, et notamment celles des enfants.

Pour ce faire est proposée, selon un premier aspect de l'invention, une installation d'embarquement d'un télésiège pour l'embarquement de personnes sur une structure porteuse, l'installation d'embarquement comprenant au moins deux portillons de cadencement adjacents pour réguler un flux de personnes à embarquer franchissant lesdits portillons de cadencement, l'installation d'embarquement étant remarquable en ce qu'elle comprend un système de détection d'une situation à risque comprenant au moins :
- un dispositif de détection apte à déterminer la présence d'une éventuelle personne au passage de chacun des portillons de cadencement et à déterminer si l'éventuelle personne a une taille supérieure à un gabarit prédéterminé ;
- une unité de traitement de données configurée pour déterminer, à partir des données issues du dispositif de détection, l'existence d'une situation à risque lorsqu'est détectée devant un portillon donné parmi les portillons adjacents une personne ayant une taille inférieure au gabarit prédéterminé, et qu'aucune personne présentant une taille supérieure au gabarit prédéterminé n'est détectée au passage de l'un au moins des portillons adjacents au portillon donné.

Une telle combinaison de caractéristiques permet de proposer une installation d'embarquement dotée d'un système de détection permettant la détection d'une situation à risque correspondant à la présence d'un enfant non accompagné directement aux côtés d'un adulte.

Selon un mode de réalisation, le gabarit prédéterminé correspond à une taille comprise entre 1m et 1,5m, de préférence égale à 1,25m.

Suivant un mode de réalisation, chaque portillon de cadencement est mobile entre deux positions extrêmes cadencées à savoir une position fermée où il bloque l'accès du portillon donné et une position ouverte où il libère l'accès du portillon donné. Dans une configuration particulière, chaque portillon comprend un poteau dressé verticalement par rapport au sol et supportant un bras d'arrêt s'étendant dans un plan horizontal, le bras d'arrêt étant en liaison pivot d'axe vertical par rapport au poteau et mobile entre une position fermée où il bloque l'accès du portillon en s'étendant sensiblement transversalement par rapport à la direction de déplacement des usagers, et une position ouverte où le bras d'arrêt est pivoté de sorte à se placer longitudinalement par rapport à la direction de déplacement des usagers, de préférence dans le sens de la marche.

Suivant un mode de réalisation, les déplacements en ouverture et en fermeture des portillons de cadencement sont synchronisés afin de permettre à tous les usagers prêts à embarquer, de pouvoir embarquer en même temps sur une même passerelle. La fermeture de chaque portillon peut être anticipée dès la détection du passage d'un usager.

Suivant un mode de réalisation, l'unité de traitement des données est connectée à une commande d'ouverture de chaque portillon, et apte à inhiber l'ouverture ou imposer le maintien en position fermée du portillon donné parmi les portillons adjacents au passage duquel a été détecté une personne ayant une taille inférieure au gabarit prédéterminé, tant que n'a pas été détecté au passage de l'un au moins des portillons adjacents au portillon donné une personne ayant une taille supérieure au gabarit prédéterminé. Une telle configuration permet de pouvoir garantir encore la sécurité de l'installation d'embarquement en palliant un éventuel manque de vigilance d'un agent de surveillance.

Suivant un mode de réalisation, l'unité de traitement des données est connectée à un système d'avertissement, le système d'avertissement comprenant de préférence un avertisseur sonore et/ou visuel. Un tel système d'avertissement permet d'avertir un agent de surveillance de l'aire d'embarquement lorsqu'une telle situation à risque est rencontrée, et notamment lorsqu'un enfant s'apprête à embarquer sans être dûment accompagné par un adulte.

Suivant un mode de réalisation, le dispositif de détection comprend au moins un premier détecteur de présence pour chaque portillon de cadencement apte à déterminer la présence d'une éventuelle personne présentant une taille supérieure à un gabarit prédéterminé et/ou un deuxième détecteur de présence pour chaque portillon de cadencement apte à déterminer la présence d'une éventuelle personne présentant une taille inférieure à un gabarit prédéterminé. De tels capteurs offrent une structure facile à fabriquer et installer sur des portillons de cadencement, qu'il s'agisse de nouveaux portillons ou bien pour équiper des portillons de cadencement déjà existants.

Suivant un mode de réalisation, le dispositif de détection, de préférence le premier et/ou le deuxième détecteur de présence, comprend au moins un capteur, de préférence un capteur comprenant au moins une cellule photoélectrique.

Suivant un mode de réalisation, le dispositif de détection comprend au moins une caméra, de préférence une unique caméra. De préférence dans ce cas, l'unité de traitement des données est apte à déterminer l'existence d'une situation à risque à partir d'une image ou d'un ensemble d'images commune(s) à tous les portillons.

Selon un autre aspect de l'invention, celle-ci a trait à un procédé de détection d'une situation à risque dans une installation d'embarquement telle que décrite ci-avant, remarquable en ce qu'il comprend au moins :
- une étape de détection configurée pour déterminer la présence d'une éventuelle personne au passage de chacun des portillons de cadencement et déterminer si l'éventuelle personne a une taille supérieure à un gabarit prédéterminé;
- une étape de traitement des données configurée pour déterminer, à partir des données issues de l'étape de détection, l'existence d'une situation à risque lorsqu'est détectée devant un portillon donné parmi les portillons adjacents une personne ayant une taille inférieure au gabarit prédéterminé, et qu'aucune personne présentant une taille supérieure au gabarit prédéterminé n'est détectée au passage de l'un au moins des portillons adjacents au portillon donné.

Suivant un mode de réalisation, le procédé de détection comprend une étape d'avertissement dans laquelle un signal d'avertissement est activé en cas de détection d'une situation à risque, de préférence une étape d'avertissement sonore et/ou visuel.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue de devant d'une installation d'embarquement comprenant une pluralité de portillons de cadencement suivant un mode de réalisation ;
[Fig. 2] : une vue de dessus de la figure 1.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

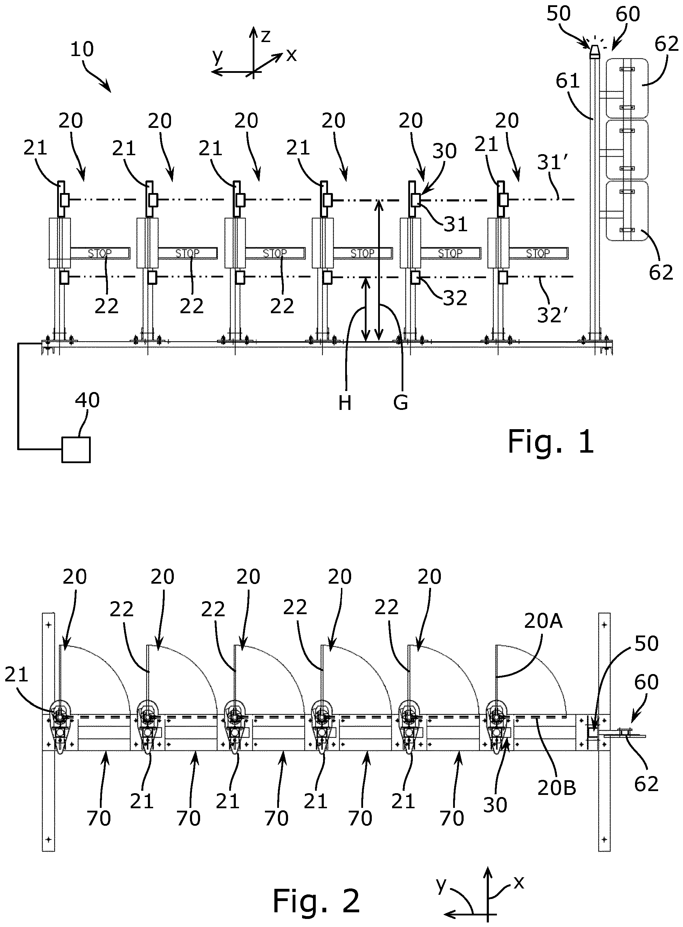

En référence aux figures 1 et 2, est illustrée une installation d'embarquement **10** d'un télésiège pour l'embarquement de personnes sur une passerelle formant une structure porteuse (non illustrée). L'installation d'embarquement **10** comprend six portillons **20** de cadencement, disposés de façon adjacente les uns par rapport aux autres, alignés suivant un axe transversal **Y** au sens de la marche des usagers se dirigeant vers une plateforme d'embarquement (non illustrée) pour embarquer sur les passerelles. Le sens de la marche des usagers s'étend suivant un axe longitudinal de référence **X.**

Le nombre de portillons **20** de cadencement correspond précisément au nombre de places, en particulier de places assises, sur les passerelles du télésiège. Les portillons **20** de cadencement sont destinés à réguler un flux de personnes à embarquer, ces personnes devant franchir une par une lesdits portillons **20** de cadencement pour accéder à la plateforme d'embarquement située en aval des portillons **20** dans le sens de la marche **X.** Chaque portillon **20** de cadencement est mobile entre deux positions extrêmes cadencées à savoir une position fermée **20A** où il bloque l'accès du portillon **20** donné et une position ouverte **20B** où il libère l'accès du portillon **20** donné (voir la figure 2). Pour assurer un meilleur flux, l'installation d'embarquement **10** est configurée de sorte que les déplacements en ouverture et en fermeture des portillons **20** de cadencement sont synchronisés. Les portillons **20** de cadencement sont donc commandés de manière concomitante pour l'ouverture et se ferment soit de manière concomitante soit dès le passage d'un usager. Chaque portillon **20** de cadencement est associé, localement, à un couloir d'accès **70** destiné au passage d'une personne. En pratique, chaque couloir d'accès **70** peut être matérialisé sur l'installation d'embarquement par des marquages au sol ou des barrières, ou bien limité au simple passage délimité principalement par les portillons **20** eux-mêmes. Quelle que soit la solution retenue, dans tous les cas, une personne à la fois peut se tenir devant un portillon **20** de cadencement et le traverser par passage cadencé, que les personnes en amont attendent leur passage de façon organisée en file, ou non.

Chaque portillon **20** de cadencement comprend un poteau **21** vertical, c'est-à-dire parallèle à un axe vertical **Z.** Chaque portillon **20** de cadencement comprend en outre un bras d'arrêt **22** s'étendant, de manière non limitative, sensiblement perpendiculairement au poteau **21** vertical et en liaison pivot d'axe vertical **Z** par rapport audit poteau **21.** Le bras d'arrêt **22** est mobile en rotation par rapport au poteau **21** entre une position fermée où il bloque l'accès du portillon **20** en s'étendant sensiblement transversalement **Y** par rapport à la direction de déplacement des usagers **X,** et une position ouverte où le bras d'arrêt est pivoté, de préférence vers l'avant par rapport au sens de la marche **X,** de sorte à se placer longitudinalement par rapport à la direction de déplacement des usagers et ne pas constituer une gêne dans la manipulation du bras d'arrêt **22.**

Chaque couloir d'accès **70** est bordé, d'un premier côté, à gauche sur les figures, par un poteau **21** d'un portillon **20** de cadencement du couloir d'accès **70** donné, et d'un autre côté, à droite sur les figures, par un poteau **21** du portillon **20** adjacent au portillon **20** donné. Pour un couloir d'accès **70** extérieur qui n'aurait pas de couloir adjacent de l'autre côté, le couloir d'accès **70** est bordé par un poteau tel qu'un poteau **61** d'au moins un moyen de signalisation **60,** sur lequel peuvent notamment être installés des panneaux signalétiques **62.** Les espaces entre ces poteaux, **21, 61** matérialisent des couloirs d'accès **70.**

Suivant une configuration avantageuse, l'ensemble des portillons **20** de cadencement **20** sont solidaires ensemble au moyen d'une base assurant la liaison des portillons **20** en reliant des extrémités inférieures des poteaux **21, 61** délimitant les couloirs **70.** Une telle base permet assurer d'assurer la stabilité de la structure de portillons **20.**

Conformément à l'invention, l'installation d'embarquement **10** comprend un système de détection d'une situation à risque comprenant au moins un dispositif de détection **30** apte à déterminer la présence d'une éventuelle personne au passage de chacun des portillons **20** de cadencement et à déterminer si l'éventuelle personne a une taille supérieure à un gabarit **G** prédéterminé. On détermine en particulier un gabarit **G** approprié correspondant à une taille moyenne d'un enfant, par exemple 1,25m.

Dans le mode de réalisation illustré sur les figures 1 et 2, le dispositif de détection **30** comprend au moins un premier détecteur **31** de présence pour chaque portillon **20** de cadencement apte à déterminer la présence d'une éventuelle personne présentant une taille supérieure ou égale au gabarit prédéterminé **G** et un deuxième détecteur **32** de présence pour chaque portillon **20** de cadencement apte à déterminer la présence d'une éventuelle personne présentant une taille inférieure à un gabarit prédéterminé.

Plus précisément, chaque portillon **20** de cadencement est équipé d'un premier et d'un deuxième détecteurs **31, 32** de présence qui comprennent chacun un capteur tel qu'un capteur comprenant au moins une cellule photoélectrique. Le premier détecteur **31** de présence est placé à une hauteur de 1,25m de sorte à déterminer la présence d'une éventuelle personne présentant une taille supérieure ou égale au gabarit prédéterminé **G.** En complément, le deuxième détecteur **32** de présence pour déterminer la présence d'une éventuelle personne présentant une taille inférieure à un gabarit prédéterminé est positionné à une hauteur **H** intermédiaire, inférieure au gabarit prédéterminé **G.** On choisira une hauteur **H** qui soit suffisamment haute pour éviter toute interaction avec tout ce qui pourrait constituer un obstacle à ras le sol, voire même le niveau de la neige, mais suffisamment basse pour que l'on puisse détecter le passage d'une éventuelle personne. On pourra par exemple choisir une hauteur H comprise entre 0,5m et 1m.

Les premier et deuxième détecteurs **31, 32** sont des cellules photoélectriques émettant chacune un faisceau **31', 32'** de lumière qui sera placé de préférence dans un plan horizontal et orienté transversalement **Y** par rapport couloir d'accès **70,** c'est-à-dire aussi par rapport à la direction de déplacement des usagers **X.** De cette manière, une cellule photoélectrique du premier détecteur, en étant placée à une hauteur gabarit **G** de 1,25m est apte à détecter le passage de toute personne d'une hauteur de 1,25m et plus. De façon similaire, une cellule photoélectrique du premier détecteur, en étant placée à une hauteur **H** inférieure au gabarit, par exemple de 0,75m par rapport au sol, est apte à détecter le passage de toute personne même d'une taille inférieure au gabarit prédéterminé.

Dans ce mode de réalisation, les premier et deuxième détecteurs **31, 32** de chaque portillon **20** sont portés par le poteau **21** vertical associé et dirigé suivant l'axe transversal au sens de la marche. De préférence, les poteaux **21** présentent un profil, ou une section, allongé longitudinalement. De cette manière, un poteau **21** peut supporter un bras d'arrêt **22** et le ou les premier et deuxième détecteurs **31, 32,** et plus généralement le dispositif de détection **30** avec un décalage longitudinal. Alternativement ou en complément, on peut prévoir que les faisceaux **31', 32'** des capteurs soient dirigés horizontalement avec un angle par rapport à l'axe transversal Y de sorte à permettre une détection de la personne en amont du portillon.

Alternativement ou en combinaison, le dispositif de détection **30** peut être au moins en partie déporté des portillons. Dans ce cas, tout ou partie du dispositif de détection **30** peut au niveau des portillons **20** d'embarquement. Il peut également être déporté plus loin d'une distance prédéterminée, par exemple quelques mètres en amont des portillons **20** avant afin d'anticiper l'alarme des avertisseurs.

L'installation d'embarquement **10** comprend en outre une unité de traitement de données **40** déportée de préférence des portillons **20** de cadencement et configurée pour déterminer, à partir des données issues du dispositif de détection **30,** notamment des capteurs **31, 32** de présence, l'existence d'une situation à risque lorsqu'est détecté devant un portillon **20** donné parmi les portillons **20** adjacents une personne ayant une taille inférieure au gabarit prédéterminé **G,** et qu'aucune personne présentant une taille supérieure au gabarit prédéterminé **G** n'est détectée au passage de l'un au moins des portillons **20** adjacents au portillon **20** donné.

L'unité de traitement des données **40** est connectée à une commande d'ouverture de chaque portillon **20,** et apte à inhiber l'ouverture ou imposer le maintien en position fermée du portillon **20** donné parmi les portillons **20** adjacents au passage duquel a été détecté une personne ayant une taille inférieure au gabarit prédéterminé, tant que n'a pas été détecté au passage de l'un au moins des portillons **20** adjacents au portillon **20** donné une personne ayant une taille supérieure au gabarit prédéterminé. De cette manière, il est possible de contrainte l'installation de sorte à éviter une situation à risque. De façon complémentaire ou alternative, l'unité de traitement des données **40** est connectée à un système d'avertissement **50,** tel qu'un avertisseur sonore et/ou visuel **50.** Un avertisseur visuel pourra être disposé par exemple sur une extrémité supérieure du poteau **61** du moyen de signalisation **60.** Bien entendu d'autres configurations sont possibles. On peut par exemple prévoir un avertisseur par portillon **20** de cadencement, un signal d'avertissement distinct étant alors activé en cas de détection d'une situation à risque pour chacun des portillons **20** de cadencement concerné. Cela permet de localiser rapidement la situation à risque.

Durant l'utilisation de l'installation, une ou des personnes se présentent devant les portillons **20** de cadencement, une personne au plus se positionnant suivant un couloir devant le bras d'arrêt **22** du portillon **20** donné, lequel est en position fermée **20A** où il bloque le passage.

Ensuite, une étape de détection est mise en œuvre pour déterminer la présence d'une éventuelle personne au passage de chacun des portillons **20** de cadencement et de détermination pour déterminer si l'éventuelle personne a une taille supérieure au gabarit **G** prédéterminé, à savoir ici une taille supérieure à 1,25m. Cette étape est mise en œuvre dès lors qu'une personne vient se placer sur le chemin un faisceau **31', 32'** de lumière des cellules photoélectriques des premier et deuxième détecteurs **31, 32.**

Une fois les informations recueillies pour chacun des portillons **20** de cadencement, une étape de traitement des données est mise en œuvre pour déterminer, à partir des données issues de l'étape de détection, l'existence d'une situation à risque lorsqu'est détecté devant un portillon **20** donné parmi les portillons **20** adjacents une personne ayant une taille inférieure au gabarit **G** prédéterminé, et qu'aucune personne présentant une taille supérieure au gabarit prédéterminé n'est détectée au passage de l'un au moins des portillons **20** adjacents au portillon **20** donné.

Si la situation à risque n'est pas détectée, alors les bras d'arrêt **22** des portillons **20** concernés peuvent pivoter vers l'avant, dans le sens de la marche, pour passer en position ouverte **20B** libérant l'accès pour le passage de la personne puis, revient ensuite en position fermée **20A** où il bloque le passage. Ce retour peut être effectué après une temporisation prédéterminée de l'ouverture, ou après détection du passage de la personne. La détection du passage peut être effectuée par les capteurs **31, 32** de présence et une temporisation peut être combinée au signal détecté de sorte qu'une fois qu'un capteur détecte un changement d'état, d'une personne présente à un état d'absence de personne, un certain délai s'écoule avant fermeture du portillon **20** concerné. Chaque portillon **20** de cadencement facilite la synchronisation de la montée des passagers sur l'aire d'embarquement sur le télésiège, de sorte à éviter notamment toute collision entre les sièges et les passagers, avant leur prise en charge.

L'installation d'embarquement est configurée de sorte que chaque portillon 20 de cadencement s'ouvre automatiquement, dès que le siège destiné aux passagers précédents est engagé sur l'aire d'embarquement en amont par rapport aux portillons 20, de sorte à laisser aux passagers le temps d'atteindre l'emplacement d'embarquement avant l'arrivée, au droit de l'emplacement d'embarquement, du siège devant les prendre en charge.

Si la situation à risque est détectée, à savoir lorsque devant un portillon **20** de cadencement, une personne de taille inférieure au gabarit **G** prédéterminé, et qu'aucune personne présentant une taille supérieure au gabarit prédéterminé n'est détectée au passage de l'un au moins des portillons **20** adjacents au portillon **20** donné, alors une étape d'avertissement se met en œuvre dans laquelle le signal d'avertissement est transmis à l'avertisseur **50** et le portillon donné reste en position fermée **20A** jusqu'à ce qu'il n'y ait plus de situation à risque détectée. L'agent de surveillance de l'aire d'embarquement peut alors visualiser le portillon concerné et intervenir si besoin.

Naturellement, l'invention est décrite dans ce qui précède à titre d'exemple. Il est entendu que l'homme du métier est à même de réaliser différentes variantes de réalisation de l'invention sans pour autant sortir du cadre de l'invention tel que décrit par les revendications annexées.

## Revendications

1. Installation d'embarquement (10) d'un télésiège pour l'embarquement de personnes sur une structure porteuse l'installation d'embarquement (10) comprenant au moins deux portillons (20) de cadencement adjacents pour réguler un flux de personnes à embarquer franchissant lesdits portillons (20) de cadencement, l'installation d'embarquement (10) étant **caractérisée en ce qu'**elle comprend un système de détection d'une situation à risque comprenant au moins :
- un dispositif de détection (30) apte à déterminer la présence d'une éventuelle personne au passage de chacun des portillons (20) de cadencement et à déterminer si l'éventuelle personne a une taille supérieure à un gabarit prédéterminé (G);
- une unité de traitement de données (40) configurée pour déterminer, à partir des données issues du dispositif de détection (30), l'existence d'une situation à risque lorsqu'est détecté devant un portillon (20) donné parmi les portillons (20) adjacents une personne ayant une taille inférieure au gabarit prédéterminé (G), et qu'aucune personne présentant une taille supérieure au gabarit prédéterminé (G) n'est détectée au passage de l'un au moins des portillons (20) adjacents au portillon (20) donné.

2. Installation d'embarquement (10) selon la revendication 1, **caractérisée en ce que** chaque portillon (20) de cadencement est mobile entre deux positions extrêmes cadencées à savoir une position fermée (20A) où il bloque l'accès du portillon (20) donné et une position ouverte (20B) où il libère l'accès du portillon (20) donné.

3. Installation d'embarquement (10) selon la revendication 2, **caractérisée en ce que** les déplacements en ouverture et en fermeture des portillons (20) de cadencement sont synchronisés, la fermeture de chaque portillon pouvant être anticipée dès la détection du passage d'un usager.

4. Installation d'embarquement (10) selon l'une quelconque des revendications précédentes, **caractérisée en ce que** l'unité de traitement des données (40) est connectée à une commande d'ouverture de chaque portillon (20), et apte à inhiber l'ouverture ou imposer le maintien en position fermée du portillon (20) donné parmi les portillons (20) adjacents au passage duquel a été détecté une personne ayant une taille inférieure au gabarit prédéterminé (G), tant que n'a pas été détecté au passage de l'un au moins des portillons (20) adjacents au portillon (20) donné une personne ayant une taille supérieure au gabarit prédéterminé (G).

5. Installation d'embarquement (10) selon l'une quelconque des revendications précédentes, **caractérisée en ce que** l'unité de traitement des données (40) est connectée à un système d'avertissement (50), le système d'avertissement comprenant de préférence un avertisseur sonore et/ou visuel.

6. Installation d'embarquement (10) selon l'une quelconque des revendications précédentes, **caractérisée en ce que** le dispositif de détection (30) comprend au moins un premier détecteur (31) de présence pour chaque portillon (20) de cadencement apte à déterminer la présence d'une éventuelle personne présentant une taille supérieure à un gabarit prédéterminé (G) et/ou un deuxième détecteur (32) de présence pour chaque portillon (20) de cadencement apte à déterminer la présence d'une éventuelle personne présentant une taille inférieure à un gabarit prédéterminé (G).

7. Installation d'embarquement (10) selon l'une quelconque des revendications précédentes, **caractérisée en ce que** le dispositif de détection (30), de préférence le premier et/ou le deuxième détecteur (31, 32) de présence, comprend au moins un capteur, de préférence un capteur comprenant au moins une cellule photoélectrique.

8. Procédé de détection d'une situation à risque dans une installation d'embarquement (10) suivant l'une des revendications précédentes, **caractérisé en ce qu'**il comprend au moins :
- une étape de détection configurée pour déterminer la présence d'une éventuelle personne au passage de chacun des portillons (20) de cadencement et déterminer si l'éventuelle personne a une taille supérieure à un gabarit prédéterminé (G);
- une étape de traitement des données configurée pour déterminer, à partir des données issues de l'étape de détection, l'existence d'une situation à risque lorsqu'est détecté devant un portillon (20) donné parmi les portillons (20) adjacents une personne ayant une taille inférieure au gabarit prédéterminé (G), et qu'aucune personne présentant une taille supérieure au gabarit prédéterminé (G) n'est détectée au passage de l'un au moins des portillons (20) adjacents au portillon (20) donné.

9. Procédé de détection d'une situation à risque suivant la revendication 8, **caractérisé en ce qu'**il comprend une étape d'avertissement dans laquelle un signal d'avertissement est activé en cas de détection d'une situation à risque, de préférence une étape d'avertissement sonore et/ou visuel.

## Patentansprüche

1. Einstiegsanlage (10) eines Sessellifts zum Einsteigen von Personen auf einer Tragstruktur, die Einstiegsanlage (10) umfassend mindestens zwei angrenzende Takttore (20) zum Regulieren eines Stroms von einsteigenden Personen, die die Takttore (20) durchqueren, wobei die Einstiegsanlage (10) **dadurch gekennzeichnet ist, dass** sie ein System zum Erkennen einer Risikosituation umfasst, mindestens umfassend:
- eine Erkennungsvorrichtung (30), die geeignet ist, um die Gegenwart einer möglichen Person beim Passieren jedes der Takttore (20) zu bestimmen, und um zu bestimmen, ob die mögliche Person eine Körpergröße über einer zuvor bestimmten Statur (G) aufweist;
- eine Datenverarbeitungseinheit (40), die zum Bestimmen, aus den Daten, die von der Erkennungsvorrichtung (30) stammen, des Bestehens einer Risikosituation konfiguriert ist, wenn vor einem gegebenen Tor (20) unter den angrenzenden Toren (20) eine Person erkannt wird, die eine Körpergröße unter einer zuvor bestimmten Statur (G) aufweist, und dass keine Person, die eine Körpergröße über der zuvor bestimmten Statur (G) vorweist, beim Passieren des mindestens einen der Tore (20) angrenzend an das gegebene Tor (20) erkannt wird.

2. Einstiegsanlage (10) nach Anspruch 1, **dadurch gekennzeichnet, dass** jedes Takttor (20) zwischen zwei getakteten Endpositionen bewegbar ist, nämlich einer geschlossenen Position (20A), in der es den Zugang zu dem gegebenen Tor (20) blockiert, und einer offenen Position (20B), in der es den Zugang zu dem gegebenen Tor (20) freigibt.

3. Einstiegsanlage (10) nach Anspruch 2, **dadurch gekennzeichnet, dass** die Öffnungsund Schließbewegungen der Takttore (20) synchronisiert sind, wobei das Schließen jedes Tores vorgezogen werden kann, sobald das Passieren eines Benutzers erkannt wird.

4. Einstiegsanlage (10) nach einem der vorstehenden Ansprüche, **dadurch gekennzeichnet, dass** die Datenverarbeitungseinheit (40) mit einer Öffnungssteuerung jedes Tores (20) verbunden und geeignet ist, um das Öffnen des gegebenen Tores (20) unter den angrenzenden Toren (20) zu verhindern oder das Halten von diesem in der geschlossenen Position zu erzwingen, bei dem eine Person beim Passieren erkannt wurde, die eine Körpergröße unter der zuvor bestimmten Statur (G) aufweist, solange keine Person beim Passieren des mindestens einen der Tore (20) angrenzend an das gegebene Tor (20) erkannt wurde, die eine Körpergröße über der zuvor bestimmten Statur (G) aufweist.

5. Einstiegsanlage (10) nach einem der vorstehenden Ansprüche, **dadurch gekennzeichnet, dass** die Datenverarbeitungseinheit (40) mit einem Warnsystem (50) verbunden ist, das Warnsystem vorzugsweise umfassend eine akustische und/oder optische Warneinrichtung.

6. Einstiegsanlage (10) nach einem der vorstehenden Ansprüche, **dadurch gekennzeichnet, dass** die Erkennungsvorrichtung (30) mindestens einen ersten Gegenwartsdetektor (31) für jedes Takttor (20), der geeignet ist, um die Gegenwart einer möglichen Person zu bestimmen, die eine Körpergröße über einer zuvor bestimmten Statur (G) vorweist und/oder einen zweiten Gegenwartsdetektor (32) für jedes Takttor (20) umfasst, der geeignet ist, um die Gegenwart einer möglichen Person zu bestimmen, die eine Körpergröße unter einer zuvor bestimmten Statur (G) vorweist.

7. Einstiegsanlage (10) nach einem der vorstehenden Ansprüche, **dadurch gekennzeichnet, dass** die Erkennungsvorrichtung (30), vorzugsweise der erste und/oder der zweite Gegenwartsdetektor (31, 32), mindestens einen Sensor, vorzugsweise einen Sensor umfassend mindestens eine fotoelektrische Zelle, umfasst.

8. Verfahren zum Erkennen einer Risikosituation in einer Einstiegsanlage (10) gemäß einem der vorstehenden Ansprüche, **dadurch gekennzeichnet, dass** es mindestens umfasst:
- einen Erkennungsschritt, der zum Bestimmen der Gegenwart einer möglichen Person beim Passieren jedes der Takttore (20) und zum Bestimmen konfiguriert ist, ob die mögliche Person eine Körpergröße über einer zuvor bestimmten Statur (G) aufweist;
- einen Datenverarbeitungsschritt, der zum Bestimmen, aus den Daten, die von dem Erkennungsschritt stammen, des Bestehens einer Risikosituation konfiguriert ist, wenn vor einem gegebenen Tor (20) unter den angrenzenden Toren (20) eine Person erkannt wird, die eine Körpergröße unter der zuvor bestimmten Statur (G) aufweist, und dass keine Person, die eine Körpergröße über der zuvor bestimmten Statur (G) vorweist, beim Passieren des mindestens einen der Tore (20) angrenzend an das gegebene Tor (20) erkannt wird.

9. Verfahren zum Erkennen einer Risikosituation gemäß Anspruch 8, **dadurch gekennzeichnet, dass** es einen Warnschritt umfasst, wobei im Falle des Erkennens einer Risikosituation ein Warnsignal, vorzugsweise eine akustische und/oder optische Warnung aktiviert wird.

## Claims

1. Chairlift boarding apparatus (10) for boarding people onto a supporting structure, the boarding apparatus (10) comprising at least two adjacent timing gates (20) for regulating a flow of people to be boarded who are crossing said timing gates (20), the boarding apparatus (10) being **characterized in that** it comprises a system for detecting a high-risk situation comprising at least:
- a detection device (30) which is capable of determining the presence of a potential person as they pass through each of the timing gates (20) and of determining whether the potential person is taller than a predetermined height (G);
- a data processing unit (40) which is configured to determine, from the data from the detection device (30), the existence of a high-risk situation when a person who is shorter than the predetermined height (G) is detected in front of a given gate (20) among the adjacent gates (20), and that no person who is taller than the predetermined height (G) is detected as they pass through at least one of the gates (20) which are adjacent to the given gate (20).

2. Boarding apparatus (10) according to claim 1, **characterized in that** each timing gate (20) is movable between two timed end positions, namely a closed position (20A) in which it blocks access to the given gate (20) and an open position (20B) in which it provides access to the given gate (20).

3. Boarding apparatus (10) according to claim 2, **characterized in that** the opening and closing movements of the timing gates (20) are synchronized, it being possible for the closing of each gate to be anticipated as soon as the passage of a user is detected.

4. Boarding apparatus (10) according to any of the preceding claims, **characterized in that** the data processing unit (40) is connected to a control for opening each gate (20), and is capable of inhibiting the opening or forcing the holding in the closed position of the given gate (20) among the adjacent gates (20) during the passage of which a person who is shorter than the predetermined height (G) has been detected, as long as a person who is taller than the predetermined height (G) has not been detected as they pass through at least one of the gates (20) which are adjacent to the given gate (20).

5. Boarding apparatus (10) according to any of the preceding claims, **characterized in that** the data processing unit (40) is connected to a warning system (50), the warning system preferably comprising an audible and/or visual warning.

6. Boarding apparatus (10) according to any of the preceding claims, **characterized in that** the detection device (30) comprises at least a first presence detector (31) for each timing gate (20), which detector is capable of determining the presence of a potential person who is taller than a predetermined height (G) and/or a second presence detector (32) for each timing gate (20), which detector is capable of determining the presence of a potential person who is shorter than a predetermined height (G).

7. Boarding apparatus (10) according to any of the preceding claims, **characterized in that** the detection device (30), preferably the first and/or the second presence detector (31, 32), comprises at least one sensor, preferably a sensor comprising at least one photoelectric cell.

8. Method for detecting a high-risk situation in a boarding apparatus (10) according to any of the preceding claims, **characterized in that** it comprises at least:
- a detection step which is configured to determine the presence of a potential person as they pass through each of the timing gates (20) and to determine whether the potential person is taller than a predetermined height (G);
- a data processing step which is configured to determine, from the data from the detection step, the existence of a high-risk situation when a person who is shorter than the predetermined height (G) is detected in front of a given gate (20) among the adjacent gates (20), and that no person who is taller than the predetermined height (G) is detected as they pass through at least one of the gates (20) which are adjacent to the given gate (20).

9. Method for detecting a high-risk situation according to claim 8, **characterized in that** it comprises a warning step in which a warning signal is activated if a high-risk situation is detected, preferably a step providing an audible and/or visual warning.
